# FASCICULE DE BREVET EUROPEEN

(11) **EP 4 581 289 B1**
(45) Date de publication et mention de la délivrance du brevet: **21.10.2026**
(21) Numéro de dépôt: 23739627.0
(22) Date de dépôt: 19.06.2023
(51) Int. Cl.: F16H 63/50, F16H 61/04, F16H 61/682, F02D 41/02, F02D 41/08

(54) **PROCÉDÉ D'INHIBITION DE FONCTIONS DE CONTRÔLE DE COUPLE D'UN MOTEUR THERMIQUE EN FONCTION D'UNE ACTIVITÉ D'UN RÉGULATEUR DE RÉGIME DE RALENTI**
VERFAHREN ZUR HEMMUNG VON DREHMOMENTSTEUERFUNKTIONEN EINES WÄRMEMOTORS AUF BASIS DER AKTIVITÄT EINES LEERLAUFREGLERS
METHOD FOR INHIBITING TORQUE CONTROL FUNCTIONS OF A HEAT ENGINE BASED ON AN ACTIVITY OF AN IDLE SPEED CONTROLLER

(30) Priorité: 29.08.2022 FR 2208618
(43) Date de publication de la demande: 09.07.2025
(73) Titulaire: Stellantis Auto SAS, 78300 Poissy (FR)
(72) Inventeur: BILLER, David, 90400 MOVAL (FR); CHOPARD, Claude, 25750 ARCEY (FR); EL HAILA, Rajae, BOUSKOURA, 25100 (MA); LOICHOT, Thierry, 25490 DAMPIERRE LES BOIS (FR); GHILARDI, Quentin, 25200 MONTBELIARD (FR); ESTIOT, Victor, 25600 NOMMAY (FR)
(74) Mandataire: PSIP
(86) Numéro de dépôt international: PCT/FR2023/050897
(87) Numéro de publication internationale: WO 2024/047291

(56) Documents cités:
- FR-A1- 2 892 081
- FR-A1- 3 016 847
- US-A1- 2008 312 035
- US-A1- 2016 290 252

## Description

La présente invention porte sur un procédé d'inhibition de fonctions de contrôle de couple d'un moteur thermique en fonction d'une activité d'un régulateur de régime de ralenti. L'invention trouve une application particulièrement avantageuse avec les véhicules automobiles munis d'un moteur à combustion interne et d'une boîte de vitesses manuelle.

Dans un véhicule automobile, la boîte de vitesses permet de transmettre la puissance générée par le moteur aux roues motrices du véhicule en démultipliant plus ou moins la vitesse de rotation d'un volant d'inertie du moteur lié mécaniquement au vilebrequin.

Dans le cas d'un véhicule à boîte de vitesses manuelle, la boîte de vitesses est reliée d'une part au volant d'inertie, via un premier arbre d'entrainement (appelé "arbre primaire") et un dispositif d'embrayage, et d'autre part aux roues motrices du véhicule, via un deuxième arbre d'entrainement (appelé "arbre secondaire") et un système de transmission. Le premier arbre primaire et le deuxième arbre secondaire sont reliés entre eux par une pluralité de pignons d'engrenage définissant une pluralité de rapports de transmission permettant de démultiplier le couple transmis par l'arbre primaire à l'arbre secondaire.

Lors d'un changement de rapport de vitesse par le conducteur, ce dernier relâche tout d'abord la pédale d'accélération et enfonce la pédale d'embrayage, ce qui a pour effet de désaccoupler le volant d'inertie du moteur et l'arbre primaire de la boîte de vitesses en écartant le disque d'embrayage du volant d'inertie. Le conducteur change alors de rapport de vitesse à l'aide du levier de vitesse puis relâche la pédale d'embrayage tout en enfonçant de nouveau la pédale d'accélération.

Lorsque la pédale d'embrayage est relâchée, le disque d'embrayage entre à nouveau en contact avec le volant d'inertie dans une phase dite de "glissement", pendant laquelle le disque glisse sur le volant d'inertie, jusqu'à atteindre une position d'engagement (dite "de collage") dans laquelle le disque d'embrayage est solidaire du volant d'inertie en rotation. En d'autres termes, le couple de l'arbre primaire de la boîte de vitesses est égal au couple transmis par l'embrayage durant toute la phase de glissement puis égal au couple transmis par le moteur à l'embrayage lorsque la position d'engagement a été atteinte et que le dispositif d'embrayage est à l'état fermé.

Lors d'un changement de rapport de vitesse montant, il peut arriver que le couple du volant d'inertie commandé par la pédale d'accélération actionnée par le conducteur, soit significativement inférieur au couple fourni par le disque d'embrayage. Une telle discontinuité de couple peut générer un choc suivi de rebonds dans la chaîne de traction lors de l'engagement du disque d'embrayage avec le volant d'inertie. Afin de résoudre ce problème, il est connu de contrôler le moteur thermique de façon à augmenter le couple du volant moteur par rapport au couple demandé par le conducteur via le contrôle de la pédale d'accélération. Il est également connu de limiter le couple du volant d'inertie pendant un changement de rapport de vitesse montant dans le cas où le conducteur accélère de façon trop importante avant la fermeture de la chaîne de traction.

Toutefois, il a été observé que la stratégie peut être appliquée à tort lors d'un changement de rapport descendant alors que le moteur est dans une phase de coupure d'injection de carburant. Or, l'ajout de couple engendre une réinjection de carburant et a pour effet d'augmenter la consommation de carburant ainsi que les émissions de particules polluantes du moteur thermique tout en détériorant l'agrément de conduite. Par ailleurs, l'activation à tort d'une fonction de limitation de couple pourrait créer une chute de couple pendant le changement de rapport de vitesse descendant.

Certains modèles de véhicules sont dépourvus de capteur de grille permettant de détecter le rapport engagé et donc un changement de rapport descendant. Sur ce type de véhicule, il existe donc le besoin de détecter un changement de rapport descendant afin de pouvoir inhiber la fonction d'ajout de couple ou de limitation de couple du volant d'inertie dans cette situation de vie.

En outre l'état de la technique est connu du document US2016290252A.

L'invention vise à combler efficacement ce besoin en proposant un procédé de contrôle d'un moteur de véhicule automobile à boîte de vitesses manuelle, ledit moteur comprenant un volant d'inertie relié à un arbre primaire de la boîte de vitesses via un dispositif d'embrayage, ledit dispositif d'embrayage comprenant un disque d'embrayage, un rapport de vitesse initial étant engagé, ledit procédé comprenant :
- une étape de placement du disque d'embrayage dans une position de retrait par rapport au volant d'inertie,
- une étape de changement de rapport de vitesse de la boîte de vitesses,
- une étape de déplacement du disque d'embrayage vers une position d'engagement de manière à entrer dans une phase de glissement,
ledit procédé comportant en outre:
- une étape de détection par anticipation d'une situation de vie au cours de laquelle un changement de rapport descendant est probable en observant une activation d'un régulateur de régime de ralenti, et
- dans le cas où le régulateur de régime de ralenti est actif, une étape d'inhibition, pendant la phase de glissement du disque d'embrayage, d'une fonction d'ajout de couple ou une fonction de limitation de couple du volant d'inertie par rapport à un couple du volant d'inertie demandé par le conducteur.

L'invention permet ainsi, en détectant par anticipation un changement de rapport descendant, d'améliorer l'agrément de conduite en évitant les à-coups susceptibles d'être engendrés par l'activation intempestive de la fonction d'ajout ou de limitation de couple du volant d'inertie. L'invention permet en outre d'éviter une dégradation de la consommation de carburant lors d'un changement de rapport de vitesse descendant tout en limitant les émissions de particules polluantes du moteur thermique.

Selon une mise en œuvre de l'invention, le régulateur de régime de ralenti est actif lorsque des conditions de régime et/ou de couple du moteur thermique sont remplies.

Selon une mise en œuvre de l'invention, la fonction d'ajout de couple ou la fonction de limitation de couple du volant d'inertie est inhibée lorsqu'une demande de couple moteur par le régulateur de régime de ralenti est supérieure à d'autres demandes de couple moteur.

Selon une mise en œuvre de l'invention, les autres demandes de couple moteur sont effectuées par des fonctions d'aide à la conduite ou par le conducteur par un appui sur une pédale d'accélération du véhicule automobile.

L'invention a également pour objet un calculateur de contrôle d'un moteur de véhicule automobile à boîte de vitesses manuelle, ledit moteur comprenant un volant d'inertie relié à un arbre primaire de la boîte de vitesses via un dispositif d'embrayage, ledit dispositif d'embrayage comprenant un disque d'embrayage, ledit calculateur étant configuré pour détecter par anticipation une situation de vie au cours de laquelle un changement de rapport descendant est probable en observant une activation d'un régulateur de régime de ralenti et, dans le cas où le régulateur de régime de ralenti est actif, pour inhiber pendant la phase de glissement du disque d'embrayage une fonction d'ajout de couple ou une fonction de limitation de couple du volant d'inertie par rapport à un couple du volant d'inertie demandé par le conducteur.

Selon une réalisation de l'invention, le calculateur est configuré pour activer le régulateur de régime de ralenti lorsque des conditions de régime et/ou de couple du moteur thermique sont remplies.

Selon une réalisation de l'invention, le calculateur est configuré pour inhiber la fonction d'ajout de couple ou la fonction de limitation de couple du volant d'inertie lorsqu'une demande de couple moteur par le régulateur de régime de ralenti est supérieure à d'autres demandes de couple moteur.

Selon une réalisation de l'invention, les autres demandes de couple moteur sont aptes à être effectuées par des fonctions d'aide à la conduite ou par le conducteur par un appui sur une pédale d'accélération du véhicule automobile.

L'invention concerne en outre un véhicule automobile comportant un calculateur tel que précédemment défini.

Selon une réalisation de l'invention, le véhicule comporte une boîte de vitesses manuelle.

Selon une réalisation de l'invention, la boîte de vitesses manuelle est dépourvue de capteur de grille permettant de détecter un rapport de vitesse engagé.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'un véhicule automobile mettant en œuvre le procédé selon l'invention d'inhibition de fonctions de contrôle de couple d'un moteur thermique en fonction d'une activité d'un régulateur de régime de ralenti ;
[Fig. 2] La figure 2 est un diagramme des étapes du procédé selon l'invention d'inhibition de fonctions de contrôle de couple d'un moteur thermique en fonction d'une activité d'un régulateur de régime de ralenti.

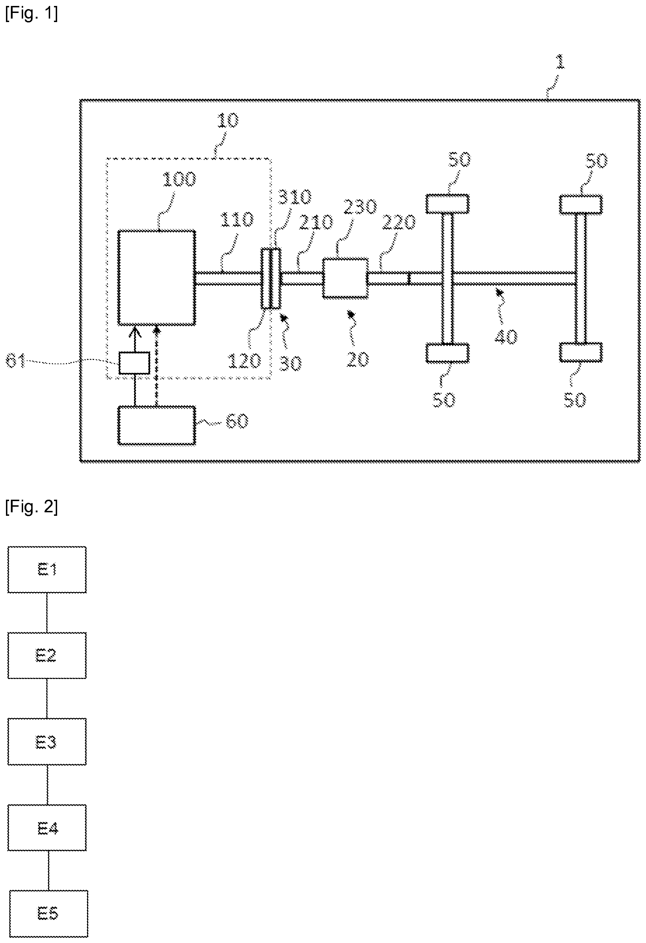

La figure 1 montre un véhicule 1 à moteur 10 thermique et à boîte de vitesses 20 manuelle. La boîte de vitesses 20 est dépourvue de capteur de grille permettant de détecter le rapport de vitesse engagé. Le véhicule 1 comprend également un dispositif d'embrayage 30, un système de transmission 40, une pluralité de roues 50 et un calculateur 60 de contrôle du moteur 10.

Le moteur 10 comprend un bloc moteur 100 comportant une pluralité de cylindres dans chacun desquels est brulé un mélange de carburant et d'air afin d'entrainer en rotation un vilebrequin 110 qui est monté de manière solidaire avec un volant d'inertie 120.

La boîte de vitesses 20 comprend un arbre primaire 210 et un arbre secondaire 220 reliés entre eux par une pluralité de pignons d'engrenage 230 permettant de démultiplier le couple transmis par l'arbre primaire 210 à l'arbre secondaire 220. La sélection du pignon, appelée rapport de vitesse, est réalisée par le conducteur (non représenté) du véhicule 1 à l'aide d'un levier de vitesses (non représenté).

Le dispositif d'embrayage 30 comprend un disque d'embrayage 310, monté de manière solidaire avec l'arbre primaire 210 de la boîte de vitesses 20. Un déplacement du disque d'embrayage est commandé par une pédale d'embrayage actionnable par le conducteur du véhicule 1. Le disque d'embrayage 310 est apte à être déplacé entre une position de d'engagement du disque d'embrayage 310 avec le volant d'inertie 120, lorsque le conducteur n'appuie pas ou appuie peu sur la pédale d'embrayage (le dispositif d'embrayage 30 est alors à l'état fermé), et une position de retrait dans laquelle le volant d'inertie 120 n'est plus en contact avec le disque d'embrayage 310, lorsque le conducteur appuie suffisamment sur la pédale d'embrayage (le dispositif d'embrayage 30 est alors à l'état ouvert).

Lorsque le dispositif d'embrayage 30 est engagé avec le volant d'inertie 120 (i.e. lorsque le disque d'embrayage 310 est en position d'engagement), le couple généré par le moteur 10 est transmis à l'arbre primaire 210 via le vilebrequin 110 et le disque d'embrayage 310 puis démultiplier via les pignons d'engrenage 230 jusqu'à l'arbre secondaire 220 qui le transmet aux roues 50 via le système de transmission 40.

Lorsque le disque d'embrayage 310 se déplace d'une position de retrait vers la position d'engagement et entre en contact avec le volant d'inertie 120, le disque d'embrayage 310 glisse tout d'abord sur le volant d'inertie 120, dans une phase dite "de glissement", avant d'atteindre la position d'engagement. Ce cas de figure se produit notamment lorsque le conducteur relâche la pédale d'embrayage après un changement de rapport de vitesse.

Le calculateur 60 permet de contrôler le moteur 10, notamment les injections de carburant dans les cylindres du moteur 10. Le calculateur 60 est également apte à contrôler le couple du volant d'inertie 120 du moteur 10 lors d'un changement de rapport de vitesse.

Le calculateur 60 est apte à mettre en œuvre le procédé selon l'invention d'inhibition de fonctions de contrôle de couple d'un moteur thermique en fonction d'une activité d'un régulateur de régime de ralenti. Ce procédé est décrit ci-après en référence avec la figure 2.

Tout d'abord, dans une étape E1, lorsque le conducteur souhaite réaliser un passage montant de rapport de vitesse, il enfonce la pédale d'embrayage, ce qui a pour effet de placer le disque d'embrayage 310 dans une position de retrait par rapport au volant d'inertie 120.

Le conducteur effectue un changement de rapport de vitesse dans une étape E2. A cet effet, le conducteur désengage manuellement un rapport de vitesse initial puis passe un rapport de vitesse cible à l'aide du levier de vitesse. Le changement de rapport de vitesse pourra être un changement de rapport de vitesse descendant, c'est-à-dire que le rapport de vitesse cible est inférieur au rapport de vitesse initial, ou un changement de rapport de vitesse montant, c'est-à-dire que le rapport de vitesse cible est supérieur au rapport de vitesse initial.

Dans une étape E3, le conducteur relâche progressivement la pédale d'embrayage dans le but de ré-embrayer le disque d'embrayage 310 avec le volant d'inertie 120. Ce faisant, le disque d'embrayage 310 se déplace tout d'abord vers la position d'engagement de manière à entrer dans une phase de glissement du disque d'embrayage 310 sur le volant d'inertie 120 avant d'atteindre la position d'engagement sur le volant d'inertie 120.

Dans une étape E4, le calculateur 60 détecte par anticipation une situation de vie au cours de laquelle un changement de rapport descendant est probable en observant une activation d'un régulateur 61 de régime de ralenti.

Dans le cas où le régulateur 61 de régime de ralenti est actif, le calculateur 60 inhibe, dans une étape E5, pendant la phase de glissement du disque d'embrayage 310 une fonction d'ajout de couple ou une fonction de limitation de couple visant respectivement à augmenter ou réduire un couple du volant d'inertie 120 par rapport à un couple du volant d'inertie 120 souhaité par le conducteur. Le couple du volant d'inertie 120 correspond à une volonté d'accélération de la part du conducteur déterminée à partir d'un enfoncement de la pédale d'accélération. Autrement dit, lorsque le calculateur 60 détecte que le régulateur 61 de régime de ralenti est actif, le calculateur 60 inhibe les fonctions de contrôle de couple au niveau du volant d'inertie 120 pouvant se produire lors d'un changement de rapport de vitesse.

Le régulateur 61 de régime de ralenti est actif lorsque des conditions de régime et/ou de couple du moteur thermique 10 sont remplies. Ces conditions de régime sont basées notamment sur des seuils de régime minimum. Par exemple, le régulateur 61 de régime de ralenti s'active lorsque le régime du moteur thermique 10 atteint un écart de régime prédéterminé, par exemple 200tr/min, par rapport à un régime de consigne de ralenti. Les conditions de régime peuvent également être basées sur des seuils de dérivées du régime du moteur thermique 10. Par exemple, dans le cas où le moteur thermique 10 décélère rapidement, c'est-à-dire que la dérivée négative du régime du moteur thermique est inférieure à un seuil, le régulateur 61 de régime de ralenti est activé.

Les conditions de couple sont basées sur le calcul d'un couple prenant en compte le gradient de régime moteur, l'inertie moteur et véhicule ainsi que les frottements (estimés) du moteur thermique 10. Si ce couple calculé dépasse un seuil calibrable, le régulateur 61 de régime de ralenti est activé.

Les conditions d'activation du régulateur 61 de régime de ralenti sont connues de l'homme du métier et peuvent varier en fonction du moteur thermique 10 en adaptant les calibrations.

La fonction d'ajout de couple ou la fonction de limitation de couple est inhibée lorsqu'une demande de couple moteur par le régulateur 61 de régime de ralenti est supérieure à d'autres demandes de couple moteur. Autrement dit, le couple demandé par le régulateur 61 de régime de ralenti est le couple maître par rapport aux autres couples.

Les autres demandes de couple moteur sont effectuées par des fonctions d'aide à la conduite ou par le conducteur par un appui sur une pédale d'accélération du véhicule automobile.

## Revendications

1. Procédé de contrôle d'un moteur (10) de véhicule (1) automobile à boîte de vitesses (20) manuelle, ledit moteur (10) comprenant un volant d'inertie (120) relié à un arbre primaire (210) de la boîte de vitesses (20) via un dispositif d'embrayage (30), ledit dispositif d'embrayage (30) comprenant un disque d'embrayage (310), un rapport de vitesse initial étant engagé, ledit procédé comprenant :
- une étape de placement (E1) du disque d'embrayage (310) dans une position de retrait par rapport au volant d'inertie (120),
- une étape de changement (E2) de rapport de vitesse de la boîte de vitesses (20),
- une étape de déplacement (E3) du disque d'embrayage (310) vers une position d'engagement de manière à entrer dans une phase de glissement,
**caractérisé en ce que** ledit procédé comporte en outre:
- une étape de détection (E4) par anticipation d'une situation de vie au cours de laquelle un changement de rapport descendant est probable en observant une activation d'un régulateur (61) de régime de ralenti, et
- dans le cas où le régulateur (61) de régime de ralenti est actif, une étape d'inhibition (E5), pendant la phase de glissement du disque d'embrayage (310), d'une fonction d'ajout de couple ou une fonction de limitation de couple du volant d'inertie (120) par rapport à un couple du volant d'inertie (120) demandé par le conducteur.

2. Procédé selon la revendication 1, **caractérisé en ce que** le régulateur (61) de régime de ralenti est actif lorsque des conditions de régime et/ou de couple du moteur thermique (10) sont remplies.

3. Procédé selon la revendication 1 ou 2, **caractérisé en ce que** la fonction d'ajout de couple ou la fonction de limitation de couple du volant d'inertie (120) est inhibée lorsqu'une demande de couple moteur par le régulateur (61) de régime de ralenti est supérieure à d'autres demandes de couple moteur.

4. Procédé selon la revendication 3, **caractérisé en ce que** les autres demandes de couple moteur sont effectuées par des fonctions d'aide à la conduite ou par le conducteur par un appui sur une pédale d'accélération du véhicule automobile.

5. Calculateur (60) de contrôle d'un moteur (10) de véhicule (1) automobile à boîte de vitesses (20) manuelle, ledit moteur (10) comprenant un volant d'inertie (120) relié à un arbre primaire (210) de la boîte de vitesses (20) via un dispositif d'embrayage (30), ledit dispositif d'embrayage (30) comprenant un disque d'embrayage (310), ledit calculateur (60) étant configuré pour détecter par anticipation une situation de vie au cours de laquelle un changement de rapport descendant est probable en observant une activation d'un régulateur (61) de régime de ralenti et, dans le cas où le régulateur (61) de régime de ralenti est actif, pour inhiber pendant la phase de glissement du disque d'embrayage (310) une fonction d'ajout de couple ou une fonction de limitation de couple du volant d'inertie (120) par rapport à un couple du volant d'inertie (120) demandé par le conducteur.

6. Calculateur selon la revendication 5, **caractérisé en ce qu'**il est configuré pour activer le régulateur (61) de régime de ralenti lorsque des conditions de régime et/ou de couple du moteur thermique (10) sont remplies.

7. Calculateur selon la revendication 5 ou 6, **caractérisé en ce qu'**il est configuré pour inhiber la fonction d'ajout de couple ou la fonction de limitation de couple du volant d'inertie (120) lorsqu'une demande de couple moteur par le régulateur (61) de régime de ralenti est supérieure à d'autres demandes de couple moteur.

8. Calculateur selon la revendication 7, **caractérisé en ce que** les autres demandes de couple moteur sont aptes à être effectuées par des fonctions d'aide à la conduite ou par le conducteur par un appui sur une pédale d'accélération du véhicule automobile.

9. Véhicule automobile (1) **caractérisé en ce qu'**il comporte un calculateur (60) défini selon l'une quelconque des revendications 5 à 8.

10. Véhicule selon la revendication 8, **caractérisé en ce qu'**il comporte une boîte de vitesses (20) manuelle.

## Patentansprüche

1. Verfahren zum Steuern eines Motors (10) eines Kraftfahrzeugs (1) mit Handschaltgetriebe (20), wobei der Motor (10) ein Schwungrad (120) aufweist, das über eine Kupplungsvorrichtung (30) mit einer Primärwelle (210) des Getriebes (20) verbunden ist, wobei die Kupplungsvorrichtung (30) eine Kupplungsscheibe (310) aufweist, wobei ein Anfangsgangverhältnis eingeschaltet wird, wobei das Verfahren umfasst:
- einen Schritt zur Positionierung (E1) der Kupplungsscheibe (310) in eine zurückgezogene Stellung relativ zum Schwungrad (120),
- einen Schaltschritt (E2) des Getriebes (20),
- einen Bewegungsschritt (E3) der Kupplungsscheibe (310) in eine Einrückposition, um in eine Schlupfphase einzutreten,
verfahren, **dadurch gekennzeichnet, dass** es ferner umfasst:
- einem Erfassungsschritt (E4) durch Vorwegnahme einer Lebenssituation, in der ein Abwärtsgang durch Beobachten einer Aktivierung eines Leerlaufdrehzahlreglers (61) wahrscheinlich ist, und
- bei aktiviertem Leerlaufdrehzahlregler (61) ein Schritt (E5), um während der Schlupfphase der Kupplungsscheibe (310) eine Drehmomentadditionsfunktion oder eine Drehmomentbegrenzungsfunktion des Schwungrades (120) gegenüber einem vom Fahrer angeforderten Drehmoment des Schwungrades (120) zu sperren.

2. Verfahren nach Anspruch 1, **dadurch gekennzeichnet, dass** der Leerlaufdrehzahlregler (61) aktiv ist, wenn Drehzahl- und/oder Drehmomentbedingungen des Verbrennungsmotors (10) erfüllt sind.

3. Verfahren nach Anspruch 1 oder 2, **dadurch gekennzeichnet, dass** die Drehmomentaddierfunktion oder die Drehmomentbegrenzungsfunktion des Schwungrades (120) gesperrt wird, wenn eine Motordrehmomentanforderung durch den Leerlaufdrehzahlregler (61) größer ist als andere Motordrehmomentanforderungen.

4. Verfahren nach Anspruch 3, **dadurch gekennzeichnet, dass** die weiteren Motordrehmomentanforderungen durch Fahrerassistenzfunktionen oder durch den Fahrer durch Abstützen auf ein Beschleunigungspedal des Kraftfahrzeuges ausgeführt werden.

5. Steuerungsrechner (60) für einen Motor (10) eines Kraftfahrzeugs (1) mit manuellem Getriebe (20), wobei der Motor (10) ein Schwungrad (120) aufweist, das über eine Kupplungsvorrichtung (30) mit einer Primärwelle (210) des Getriebes (20) verbunden ist, wobei die Kupplungsvorrichtung (30) eine Kupplungsscheibe (310) aufweist, wobei der Rechner (60) so konfiguriert ist, dass er eine Lebenssituation, während der ein Wechsel stattfindet, vorwegnimmt Ein Abwärtsgang ist unter Beobachtung einer Aktivierung eines Leerlaufdrehzahlreglers (61) und, falls der Leerlaufdrehzahlregler (61) aktiv ist, zur Unterdrückung einer Drehmomentadditionsfunktion oder einer Drehmomentbegrenzungsfunktion des Schwungrades (120) während der Schlupfphase der Kupplungsscheibe (310) in Bezug auf ein vom Fahrer angefordertes Drehmoment des Schwungrades (120) wahrscheinlich.

6. Rechner nach Anspruch 5, **dadurch gekennzeichnet, dass** er ausgebildet ist, den Leerlaufdrehzahlregler (61) zu aktivieren, wenn Drehzahl- und/oder Drehmomentbedingungen des Verbrennungsmotors (10) erfüllt sind.

7. Rechner nach Anspruch 5 oder 6, **dadurch gekennzeichnet, dass** er so konfiguriert ist, dass er die Drehmomentaddierfunktion oder die Drehmomentbegrenzungsfunktion des Schwungrades (120) unterdrückt, wenn eine Motordrehmomentanforderung durch den Leerlaufdrehzahlregler (61) größer ist als andere Motordrehmomentanforderungen.

8. Rechner nach Anspruch 7, **dadurch gekennzeichnet, dass** die weiteren Motordrehmomentanforderungen durch Fahrerassistenzfunktionen oder durch den Fahrer durch eine Abstützung auf ein Beschleunigungspedal des Kraftfahrzeuges durchführbar sind.

9. Kraftfahrzeug (1), **dadurch gekennzeichnet, dass** es einen Rechner (60) aufweist, der nach einem der Ansprüche 5 bis 8 definiert ist.

10. Fahrzeug nach Anspruch 8, **dadurch gekennzeichnet, dass** es ein Schaltgetriebe (20) aufweist.

## Claims

1. A method of controlling an engine (10) of a motor vehicle (1) having a manual transmission (20), the engine (10) having a flywheel (120) connected via a clutch device (30) to a primary shaft (210) of the transmission (20), the clutch device (30) having a clutch disk (310), wherein an initial gear ratio is engaged, the method comprising:
- a step for positioning (E1) the clutch disk (310) in a retracted position relative to the flywheel (120),
- a shifting step (E2) of the transmission (20),
- a movement step (E3) of the clutch disk (310) into an engagement position in order to enter a slip phase,
a method **characterized in that** it further comprises:
- a detection step (E4) by anticipating a life situation in which a downward gear is likely by observing an activation of an idling speed controller (61), and
- when the idling speed controller (61) is activated, a step (E5) for blocking a torque addition function or a torque limiting function of the flywheel (120) during the slip phase of the clutch disk (310) with respect to a torque of the flywheel (120) requested by the driver.

2. Method according to Claim 1, **characterized in that** the idling speed controller (61) is active when speed and/or torque conditions of the internal combustion engine (10) are met.

3. Method according to claim 1 or 2, **characterized in that** the torque adding function or the torque limiting function of the flywheel (120) is inhibited when an engine torque demand by the idle speed controller (61) is greater than other engine torque demands.

4. Method according to Claim 3, **characterized in that** the further engine torque requirements are carried out by driver assistance functions or by the driver by being supported on an acceleration pedal of the motor vehicle.

5. Control computer (60) for an engine (10) of a motor vehicle (1) having a manual transmission (20), the engine (10) comprising a flywheel (120) connected to a primary shaft (210) of the transmission (20) via a clutch device (30), the clutch device (30) comprising a clutch disk (310), the computer (60) being configured to anticipate a life situation during which a change occurs. A downward gear is under observation of an activation of an idle speed controller (61) and, if the idle speed controller (61) is active, for suppressing a torque addition function or a torque limitation function of the flywheel (120) during the slip phase of the clutch disk (310) with respect to a torque of the flywheel (120) required by the driver probably.

6. Computer according to Claim 5, **characterized in that** it is designed to activate the idling speed controller (61) when speed and/or torque conditions of the internal combustion engine (10) are met.

7. Computer according to claim 5 or 6, **characterized in that** it is configured to suppress the torque adding function or the torque limiting function of the flywheel (120) when an engine torque demand by the idle speed controller (61) is greater than other engine torque demands.

8. Computer according to Claim 7, **characterized in that** the further engine torque requirements can be carried out by driver assistance functions or by the driver by a support on an acceleration pedal of the motor vehicle.

9. Motor vehicle (1), **characterized in that** it comprises a computer (60) defined according to any one of Claims 5 to 8.

10. Vehicle according to Claim 8, **characterized in that** it has a manual transmission (20).
